Europäisches Patentamt

European Patent Office

Office européen des brevets

(19)

(11) Publication number: 0 196 907
A2

# EUROPEAN PATENT APPLICATION

(21) Application number: 86302391.7

(22) Date of filing: 01.04.86

(51) Int. Cl.⁴: H 02 M 3/335

(30) Priority: 28.03.85 GB 8508064

(43) Date of publication of application:
08.10.86 Bulletin 86/41

(84) Designated Contracting States:
DE FR GB

(71) Applicant: Coutant Electronics Limited
Kingsley Avenue
Ilfracombe Devon EX34 8ES(GB)

(72) Inventor: Cross, Bryan
34 Fern Way
Ilfracombe N. Devon(GB)

(72) Inventor: Howard, Alwyn George

deceased(GB)

(72) Inventor: Wheele, Andrew Douglas Buxton
19 Brookdale Avenue
Ilfracombe N. Devon(GB)

(74) Representative: Goldsmith, Barry Sanders et al,
Marks & Clerk 57/60 Lincoln's Inn Fields
London WC2A 3LS(GB)

(54) Electrical power supplies.

(57) A switched-mode power supply having a main output (O/P1) and one or more other outputs (O/P2, O/P3 and O/P4), wherein the outputs are regulated both by flyback control and forward control and wherein the power supply includes a transformer (T) having a primary winding, a main output winding (L2) and one or more other output windings (L3, L4 and L5), a primary converter (1) associated with the primary winding, a forward conversion circuit (S1, T, D2, D3, $L_H$ and C1) associated with the main output winding (L2) for supplying the main output (O/P1), one or more flyback conversion circuits associated with the other output winding or windings (L3, L4 and L5) for supplying the other output or outputs (O/P2, O/P3 and O/P4), a forward control circuit (4) connected to the forward conversion circuit and arranged to control the main output (O/P1) in response to a signal derived from one or more of the other outputs (O/P2, O/P3 and O/P4), and a flyback control circuit (2) connected to the primary converter (1) and arranged to control the other output or outputs (O/P2, O/P3 and O/P4) in response to a signal derived from the main output (O/P1). In an alternative arrangement, a further main output winding (L1) is provided in a flyback conversion circuit arranged to control the forward control circuit (4).

FIG.3.

M&C FOLIO: 230P49481                    WANGDOC: 0323s

Title:-  ELECTRICAL POWER SUPPLIES

This invention relates to electrical power supplies and
is concerned, more particularly, with power supplies of
the switched-mode converter type when provision must be
made for more than one output.

In such power supplies, the existence of more than one
output presents considerable problems if it is desired
to regulate the outputs effectively and efficiently
without undue complication and expense.  Essentially,
such power supplies at present available represent a
compromise between these conflicting requirements and
are designed having regard to the intended particular
use of the power supply in terms of power range, degree
of regulation required on each output, and so forth.

It is an object of the present invention to provide an
improved general purpose switched-mode power supply
having a number of outputs in which efficient regulation
is achieved without undue complexity.

Some known switched-mode converters operate by using
forward conversion in which the primary is coupled to
the secondary through a transformer by normal transformer action i.e. energy demanded by the secondary is reflected to the primary and supplied by the primary instantaneously.

In other converters, which use flyback conversion, energy is stored in the primary of the transformer and when the primary switch is opened, the secondary voltages reverse and the stored energy is then transferred into the secondary circuits. In effect the device is not a transformer, but a coupled inductor, which provides the desired primary - secondary isolation. The chief merit is that no further inductors are required in the secondary.

The present invention consists in a switched-mode power supply having a main output and one or more other outputs, wherein the outputs are regulated both by flyback control, i.e. controlling the stored energy of flyback conversion, and forward control, i.e. controlling the direct energy of forward conversion.

In one arrangement, the main output is supplied by forward conversion controlled by a weighted average signal derived from one or more of the other outputs and the other outputs are supplied by flyback conversion controlled by the main output.

In a further arrangement, the flyback and forward conversions are both controlled by the main output.

In the accompanying drawings :-

Figure 1 is a block diagram of one form of power supply according to the present invention,

Figure 2 is a block diagram of an alternative form of power supply according to the present invention,

Figure 3 is a simplified circuit diagram of the power supply of figure 1, and

Figure 4 shows waveforms associated with the power supply of figure 3.

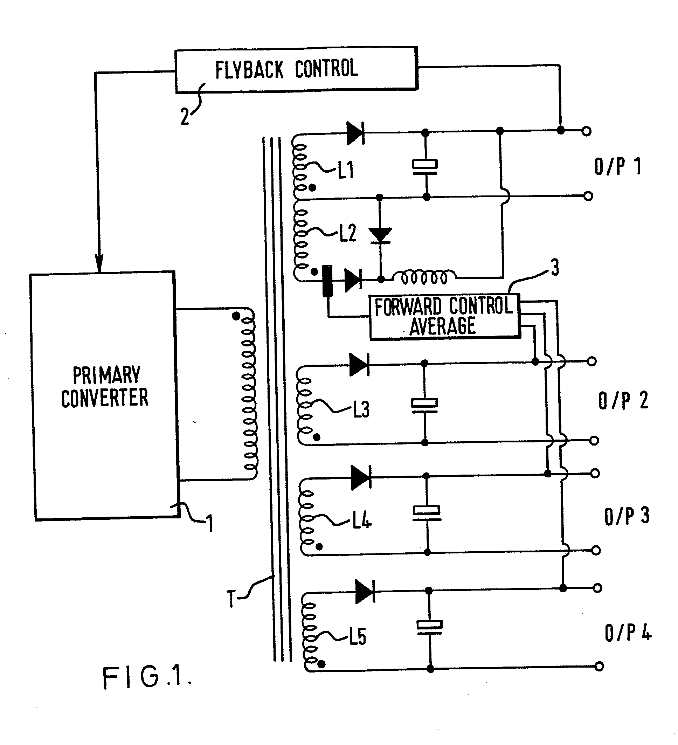

In carrying the invention into effect according to one convenient mode by way of example, figure 1 shows the block diagram of a switched-mode power supply having a primary converter 1 connected to a transformer T having windings L1 and L2 supplying a main output O/P1 and other windings L3, L4 and L5 supplying other outputs O/P2, O/P3 and O/P4. Winding L2 provides most of the power at the output O/P1 by forward conversion, whilst winding L1 provides some power by flyback conversion. The other outputs O/P2, O/P3 and O/P4 associated with windings L3, L4 and L5 are supplied with stored energy of flyback conversion controlled by a flyback control circuit 2 receiving a signal from the main output.

4

The main output O/P1 is under forward control by a weighted average signal derived by a forward control circuit 3 receiving inputs from the other outputs associated with windings L3, L4 and L5.

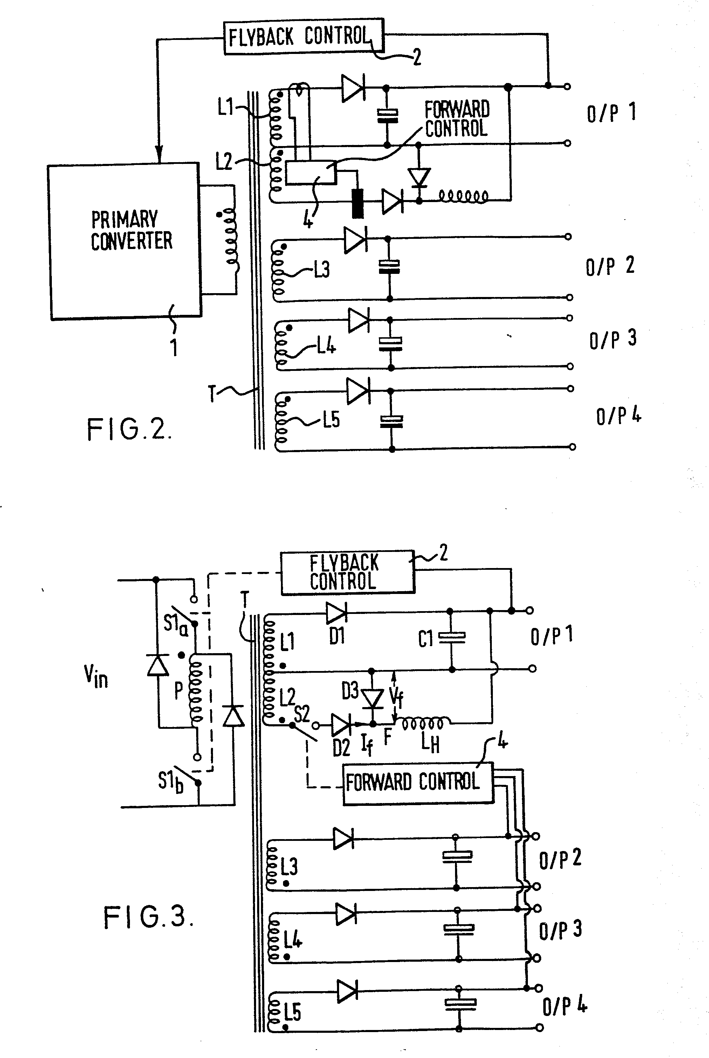

Figure 2 shows an alternative switched-mode power supply in which, as before, a signal is fed back from the main output O/P1 to the flyback control circuit 2 to apply flyback control. However, in this circuit, forward control applied to the main output by forward control circuit 4 is controlled by the current in the flyback portion of the main output.

This circuit has the following advantages for a general purpose, mid-range power supply:-

(i)     the relative complexity of forward conversion is
        only needed for the main output;

(ia)    the main output current may be reduced to zero
        without affecting the other outputs,

(ib)    the main output voltage may be varied without
        affecting the other outputs,

(ii)    the reguation of the other outputs is theoretically
        as good as that for any flyback system, but
        in practice is better since the converter
        mark-space ratio is subject to much less fluctuation thus maintaining the effects of leakage inductance in the transformer at a sensible constant level throughout the power range;

(iia)  the average value of the other outputs may be adjusted independently of the main output.

(iii)  output current ripple on the main output is better than for either flyback or forward control alone.  If required for the other outputs then forward control could also be applied to these.

(iv)  peak power capability of the main output is as good as forward control alone and for any other output having forward control applied to it.

(v)  at low power the printed cirucit area efficiency is as good as flyback control alone, and at high power the printed circuit area efficiency for outputs having a forward conversion component is better than flyback control alone if not as good as forward control alone.

(vi)  performance similar to separate forward and flyback convertors is achieved in a single converter employing one transformer, one set of primary switches and one primary control circuit.

6

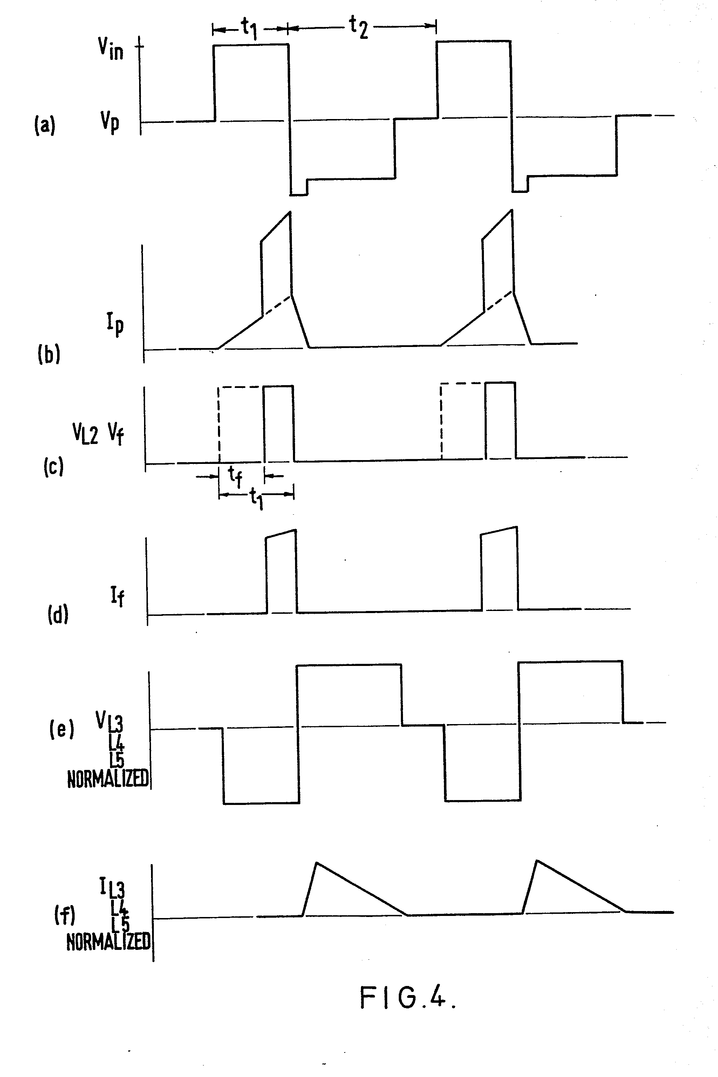

The mode of operation is explained in more detail by reference to figure 3 which shows a simplified circuit diagram of the power supply of figure 1, and figure 4 which shows waveforms associated with figure 3. In practice, switch $S_1$ will be a semiconductor and $S_2$ may be semiconductor or magnetic.

Output O/P1 is produced by the combination of the outputs of secondary windings L1 and L2. With switch $S_2$ closed, winding L2 drives a conventional forward conversion circuit consisting of switches S1a and S1b, transformer T, secondary diodes D2 and D3, inductor $L_H$ and capacitor C1, which form a conventional transformer coupled "buck" converter. When switch $S_2$ is open, this action is inhibited. If switch $S_2$ is then closed within the time period in which switches S1a and S1b are closed, then winding $L_2$, switch $S_2$, diodes $D_2$ and $D_3$, inductor $L_H$ and capacitor C1, form a secondary "buck" regulator. Winding L1 and diode $D_1$ form a 'flyback' connection which passes energy to capacitor C, and output O/P1 during the period in which switches S1a and S1b are open, this energy having been stored magnetically in the transformer during the closed period of S1a and S1b. Winding L1 serves to smooth the provision of energy to the output and hence may reduce the size of inductor $L_H$ and/or capacitor C1. Winding $L_1$ may be omitted. Outputs O/P2, O/P3 and O/P4 are provided with flyback energy only, provided in a similar manner to that of output O/P1.

The flyback control circuit 2 controls the duty cycle of switches S1a and S1b to maintain output O/P1 at a constant voltage. The forward control average circuit 4 acts to control switch $S_2$ to maintain the average of outputs OP/2, OP/3 and O/P4 at a constant level. Note that this control may have as input any number of flyback type outputs, including a single output.

Figures 4 (a) and (b) show somewhat idealised voltage and current waveforms respectively appearing across the primary $P_1$ of transformer T. These result from the action of switches S1a and S1b which are closed for period $t_1$ and show reflected voltage from the secondary circuits during period $t_2$ when switches S1a and S1b are open. During period $t_1$, $V_p$ equals the impressed voltage $V_{in}$. During period $t_2$ it initially clamps to $-V_{in}$ briefly and then to a lower level equal to the reflected voltage of the flyback outputs O/P2, O/P3 and O/P4.

The associated current waveform (b) shows, during period $t_1$, a linear ramp of magnetising current producing the store of energy to be released to the flyback output during period $t_2$. Superimposed on this ramp after

8

time delay $t_f$ is a current pedestal being the reflected current from output O/P1.

Figure 4(c) shows in dashed lines the voltage across winding $L_2$ as a replica, modified by turns ratio, of that appearing across winding P1. The application of this voltage to output O/P1 is delayed by means of switch $S_2$ for a period $t_f$, so that the voltage $V_f$ at point F is as shown in full lines. The corresponding current $I_f$ at point F is shown in Figure 4(d). Figures 4(e) and (f) show for completeness, the waveforms of the voltage across the flyback outputs O/P2, O/P3 and O/P4 and the current through their associated windings. Note that, for illustration purposes, complete energy transfer is shown. This is not a requirement of the invention.

Referring again to Figure 3(c), during period $t_f$ ($t_f \leq t_1$), and switch $S_2$ is open. Therefore output O/P 1 acts in a forward conversion mode only during the period $(t_1 - t_f)$. Ignoring switching and resistive drop

$$V_1 = V_{in} \frac{t_1 - t_f}{t_1 + t_2} \quad (t_1 + t_2 = \text{constant})$$

For $V_1$ = constant, any change in $t_f$ must be accompanied by a corresponding change in $t_1$ which is accomplished by the flyback control loop and switches $S_1$.

However the value of $t_1$ determines the energy available for flyback outputs O/P2, O/P3 and O/P4. The value of $t_f$ is varied via the forward control loop and switch $S_2$ to maintain the average voltages of the flyback outputs constant. Note that any number of outputs may be averaged. For example, output O/P2 maybe regulated alone, in which case extremely good regulation is achieved at this output at the expense of degraded regulation on outputs O/P3 and O/P4, and so forth.

The net result of the two control loops is to allow independent adjustment of forward conversion and flyback conversion, effectively producing the performance of two separate converters, but with only one transformer and primary circuit.

The power supply shown in figure 2 is an alternative form which achieves a similar effect. The action of the switches and the feedback control circuit is the same as previously described. The forward control circuit 4 however senses the integral of the current flowing in winding L1 (whose presence is mandatory in this arrangement).  This is a measure of the flyback energy being contributed to output O/P1 by winding L1.  By maintaining this constant through the action of the forward control circuit 4 and switch $S_2$, and by proper

selection of the turns on windings L1, L3, L4, etc.,such

that        <u>Voltage of output</u>
          Turns of associated winding is lower for output O/P1 than for the equivalent of any other flyback output, an improved regulation may be obtained from the flyback outputs.

CLAIMS:

1. A switched-mode power supply having a main output and one or more other outputs, wherein the outputs are regulated both by flyback control, i.e. controlling the stored energy of flyback conversion, and forward control, i.e. controlling the direct energy of forward conversion.

2. A switched-mode power supply as claimed in claim 1, wherein the main output is supplied by forward conversion controlled by a weighted average signal derived from one or more of the other outputs and the other outputs are supplied by flyback conversion controlled by the main output.

3. A switched-mode power supply as claimed in claim 1, wherein the main output is supplied by forward and flyback conversion and the other outputs are supplied by flyback conversion, both the forward and flyback conversion being controlled by the main output.

4. A switched-mode power supply as claimed in claim 1; which includes a transformer having a primary winding, a main output winding and one or more other output windings, a primary converter associated with the primary winding, a forward conversion circuit associated

12

with the main output winding for supplying the main output, one or more flyback conversion circuits associated with the other output winding or windings for supplying the other output or outputs, a forward control circuit connected to the forward conversion circuit and arranged to control the main output in response to a signal derived from one or more of the other outputs, and a flyback control circuit connected to the primary converter and arranged to control the other output or outputs in response to a signal derived from the main output.

5. A switched-mode power supply as claimed in claim 1, which includes a transformer having a primary winding, at least two main output windings and one or more other output windings, a primary converter associated with the primary winding, a forward conversion circuit associated with one of the main output windings for supplying the main output, a flyback conversion circuit associated with the other of the main output windings also for supplying the main output, one or more further flyback conversion circuits associated with the other output winding or windings for supplying the other output or outputs, a forward control circuit connected to the forward conversion circuit and arranged to control the main output in response to a signal derived from the flyback conversion circuit supplying the main output, and a flyback control circuit connected to the primary converter and arranged to control the other output or outputs in response to a signal derived from the main output.

FLYBACK CONTROL

2

O/P 1

L1

L2

FORWARD CONTROL
AVERAGE

3

PRIMARY
CONVERTER

1

L3

O/P 2

L4

O/P 3

T

L5

O/P 4

FIG.1.

FIG.2.

FIG.3.

FIG.4.